# EUROPÄISCHE PATENTANMELDUNG

(11) **EP 1 717 466 A2**
(43) Veröffentlichungstag der Anmeldung: **02.11.2006**
(21) Anmeldenummer: 06006459.9
(22) Anmeldetag: 29.03.2006
(51) Int. Cl.: F16C 23/04

(54) **Gleitlager mit einem sich erweiternden Lagerspalt im Randbereich**

(30) Priorität: 27.04.2005 DE 102005019984
(71) Anmelder: A. FRIEDR. FLENDER AG, 46395 Bocholt (DE)
(72) Erfinder: Denecke, Holger, Dipl.-Ing., 46499 Hamminkeln (DE); Kisters, Bernd, Dipl.-Ing., 47546 Kalkar (DE)
(74) Vertreter: Radünz, Ingo

(57) **Zusammenfassung**

Eine hydrodynamische radiale Gleitlagerung für eine Welle (1), bestehend aus einer die Umfangsfläche (16) der Welle (1) umgebenden Lagerbuchse (2) mit einer inneren, zylindrischen Mantelfläche (8) ist angegeben, wobei zur Stirnseite der Lagerbuche (2) hin ein von der Zylinderform abweichender Bereich (14) vorgesehen ist und wobei der Abstand zwischen der Umfangsfläche (16) der Welle (1) und der inneren Mantelfläche (8) der Lagerbuchse (2) im abweichenden Bereich (14) entlang einer stetig verlaufenden Kurve zunehmend größer ausgebildet ist.

## Beschreibung

Die Erfindung betrifft eine hydrodynamische radiale und eine axiale Gleitlagerung mit den Merkmalen des Oberbegriffes der Ansprüche 1 und 4.

Derartige hydrodynamische Gleitlager sind aus vielfältigen Konstruktionslösungen bekannt. Die Gleitlager bestehen aus der Paarung einer zylindrischen Welle und einer ganz oder teilweise umschließenden zylindrischen Lagerbuchse. Die Werkstoffe von Welle und Lagerbuchse sind so aufeinander abgestimmt, dass die Lagerbuchse weicher und nachgiebiger als die Welle ist. Die Bauelemente weisen zueinander ein bestimmtes Spiel auf, so dass sich zwischen ihnen ein Ringspalt bildet. In diesen Spalt strömt Schmieröl ein und mit Beginn der Wellenrotation entsteht ein trennender Schmierfilm zwischen Welle und Lagerbuchse. Die Welle stellt sich im konstanten Betrieb mit einer bestimmten Exzentrizität zu der idealen Wellenachse in einem stabilen Arbeitspunkt ein. In Umfangsrichtung erzeugt die Drehbewegung in Wechselwirkung mit der veränderlichen Ringspalthöhe eine dem Drehsinn folgende Ölströmung. Gleichzeitig steigt der hydrodynamische Druck im Öl bis in den Bereich des engsten Spalts kontinuierlich an und hebt die Welle von der Lagerbuchse ab.

Aufgrund des trennenden Schmierfilms haben die hydrodynamischen Gleitlager den besonderen Vorteil, dass diese einen fast verschleißfreien Betrieb ermöglichen. Gleichzeitig ist die Konstruktion und Fertigung einfach und führt zu robusten standfähigen Lagerungen.

Insbesondere Anwendungen mit höchsten Anforderungen an einen langen unterbrechungsfreien und zuverlässigen Betrieb in Schiffsantrieben oder auch in Mühlen-, Turbo-, Planeten- und Windkraftgetrieben nutzen die vorteilhaften Eigenschaften der Gleitlager. Die Auslegung der Gleitlager richtet sich vorrangig an dem Ziel höchster Anforderungen an einen langen zuverlässigen Betrieb aus. Im Mittelpunkt der Auslegung steht die Bemessung des erforderlichen minimalen Schmierspalts, der exzentrischen Wellenverlagerung, der Lagertemperatur und des Schmierölbedarfs. Dem wichtigen Auslegungsziel des verschleißfreien Betriebs im Bereich der Flüssigkeitsreibung ist die Aufgabe einer optimalen Ausnutzung der vorgegebenen Materialeigenschaft "Tragfähigkeit" untergeordnet. Die Gleitlager werden deshalb regelmäßig zu groß dimensioniert.

In axialer Richtung haben alle Gleitlager eine endliche Breite, mit der die Tragfähigkeit des Gleitlagers begrenzt ist. Aufgrund allgemeiner Erfahrungswerte soll das Verhältnis von Lagerbreite b zum Wellendurchmesser d für flüssigkeitsgeschmierte Gleitlager etwa im Verhältnis von b/d = 0,5 bis 1,0 liegen. Darauf bauen bekannte standardisierte Vorzugsreihen für Gleitlager auf und stellen dem Konstrukteur in Abhängigkeit vom Wellendurchmesser eine Auswahl einbaufertiger Gleitlager mit erfahrungsgemäß geeigneten Dimensionen zur Verfügung. Vorteilhaft ist die problemlose Austauschbarkeit und schnelle Verfügbarkeit standardisierter Komponenten im Servicefall. Auch hier gehört die maximal auftretende Flächenpressung zu den Auswahlkriterien. Aufgrund der standardisierten Lagergrößen ist keine optimierte Anpassung der Lagergeometrie an den individuellen Fall möglich, so dass auch hier häufig das nächstgrößere Gleitlager gewählt werden muss.

Ein wichtiges bekanntes Problem bei der Gestaltung der Gleitlagerung ist die Störung der idealen geometrischen Bedingungen durch die lastabhängige Wellendurchbiegung oder mögliche Querversetzungen benachbarter Gleitlager aufgrund von Fertigungstoleranzen. Solche Ursachen führen zu einer Verkantung der Welle in der Lagerbuchse oder auch zu einer Krümmung der Welle gegenüber der idealen Drehachse. Insbesondere führen solche Fehler zu einem begrenzten Bereich der Mischreibung, in der die erforderliche minimale Schmierspalthöhe nicht erreicht wird. Außerdem tritt eine nachteilige Erhöhung der Flächenpressung in den Eingangsbereichen der Lagerbuchse auf. Ebenso behindert eine Querschnittsveränderung den ungehinderten Abfluss des Schmieröls und führt somit auch zu einer nachteiligen Erhöhung der Öltemperatur.

Zur Lösung der oben genannten Probleme versuchen bekannte Konstruktionsempfehlungen, eine Ausrichtung der Lagerbuchse am tatsächlichen Verlauf der Welle zu erreichen. Dazu werden Änderungen an der konstruktiven Gestaltung der Lagerbuchse oder auch lastabhängige elastische Verformungen an verschiedenen Elementen der Lagerung benutzt. Beispielsweise sind Freidrehungen an den inneren und äußeren Mantelflächen der Lagerenden bekannt. Andere Konstruktionen sehen eine kugelförmige Gestaltung der äußeren Mantelfläche der Lagerschale vor. Dabei soll sich bei der Montage die Lagerbuchse an dem Verlauf der Welle ausrichten. Darüber hinaus gibt es Ansätze, bei denen die Steifigkeit der Bauteile so aufeinander abgestimmt wird, dass sich eine nachgiebige und elastische Verformung oder Ausrichtung der Bauteile zueinander einstellt. Nachteilig an den bekannten Konzepten ist der große Aufwand in der Auslegung und der Fertigung der Bauteile. Insbesondere wird damit das Problem des Kantentragens auch nicht vollständig beseitigt. Häufig lassen sich die exakten elastischen Verformungen nur individuell bestimmen, so dass eine universelle Übertragbarkeit der Ergebnisse nicht möglich ist.

Aus der DE 31 44 720 A1 ist eine Lösung bekannt, bei der die gesamte Mantelgeometrie der Lagerbuchse oder der Welle mit einem konischen oder balligen Profil versehen wird. Es entsteht der geometrische Körper eines Rotationshyperboloids. Nachteilig an diesem Verfahren ist die Notwendigkeit, die gesamte Breite des Gleitlagers mit der Profiländerung zu bearbeiten. Zwar erstreckt sich die Profiländerung in radialer Richtung nur über einige wenige Mikrometer. Aber eine vorteilhafte Eigenschaft von Gleitlagern ist die einfach zu fertigende und messtechnisch zu prüfende zylindrische Bohrung. Die Lehre der DE 31 44 720 A1 gibt diesen Vorteil auf. Die Profiländerung erzielt ihre Wirkung nur im stationären Betriebspunkt, in dem alle Lasten den vorgegebenen Sollwert erreichen. Insbesondere im Teillastbetrieb oder während des Anlaufs bewirkt diese vollständige Profiländerung einen negativen zusätzlichen Fehler, der zu einem größeren Verschleiß in längeren Mischreibungsphasen führt. Somit ist mit der vollständigen Profiländerung keine universelle Standardisierung möglich.

Besonders kleine Gleitlagerbuchsen sind am äußeren Umfang mit einer Presspassung versehen. Sie werden bei der Montage in ein weiteres Maschinenteil reibschlüssig eingepresst. Nachfolgend müssen die fügungsbedingten Verformungen durch den Fertigungsschritt "Reiben der Lauffläche" wieder beseitigt werden. Dieser notwendige Schritt entfernt ebenfalls eine Profiländerung nach der DE 31 44 720 A1. Bei großen Gleitlagern ist ein weicherer Lagerwerkstoff auf einem metallischen Grundkörper in einer relativ dünnen Schicht aufgebracht. Eine Profilierung über die gesamte Lagerbreite führt zu einer Verringerung der Schichtdicke. Gerade an den hoch belasteten Enden reicht die profilierte Schichtdicke nicht mehr für eine ausreichende Tragfähigkeit des Werkstoffs aus.

In einem idealen Gleitlager ohne Verkantung bildet sich über die Breite ein parabelförmiger Verlauf der Flächenpressung aus. Die minimale Schmierspalthöhe bleibt über die gesamte Lagerbreite konstant. Der Scheitelpunkt der maximal auftretenden Pressung tritt in der Hälfte der Lagerbreite auf. Die Verkantung der Welle verschiebt den Scheitelpunkt der maximalen Pressung in Richtung des Eintritts in die Lagerbuchse. Zudem steigt der Maximalwert im Vergleich zum Idealfall auf einen überproportional hohen Wert an. Im Gleitlager mit Verkantung folgt über die Lagerbreite ein schneller Abfall im Pressungsverlauf und verläuft bis zum Lagerende relativ konstant auf niedrigem Niveau. Als ein Auslegungskriterium darf die maximale Flächenpressung die zulässige Flächenpressung des Lagerwerkstoffs nicht überschreiten. Als Nachteil stellt sich somit eine besonders niedrige Ausnutzung der vorhandenen Tragfähigkeit der gesamten Lagerbuchse ein. Darüber hinaus unterschreitet im Eingangsbereich der Lagerbuchse die minimale Schmierspalthöhe den erforderlichen Mindestwert. Damit sich auch hier oberhalb der lokal begrenzten Mischreibung die notwendige Flüssigkeitsreibung einstellt, bestimmen die geometrischen Verhältnisse im Eingangsbereich der Lagerbuchse in besonders nachteiliger Weise auch den unkritischen Bereich im hinteren Teil des Gleitlagers. Auch hier führen die realen Bedingungen zu einer Überdimensionierung des Gleitlagers.

Der Erfindung liegt die Aufgabe zugrunde, die gattungsgemäße Gleitlagerung so zu gestalten, dass bei einer lastbedingten Wellendurchbiegung oder einer möglichen Querversetzung benachbarter Gleitlager die hydrodynamischen Schmiereigenschaften im Gleitlager mit einfachen Mitteln aufrechterhalten werden können.

Die Aufgabe wird bei einer gattungsgemäßen radialen Gleitlagerung erfindungsgemäß durch die kennzeichnenden Merkmale des Anspruches 1 und bei einer gattungsgemäßen axialen Gleitlagerung erfindungsgemäß durch die kennzeichnenden Merkmale des Anspruches 4 gelöst. Vorteilhafte Ausgestaltungen der Erfindung sind Gegenstand der Unteransprüche.

Dadurch, dass die zylindrische innere Mantelfläche der Lagerbuchse bei der radialen Gleitlagerung bzw. die ebene Lagerfläche bei der axialen Gleitlagerung nur örtlich begrenzt im Randbereich mit einem von der ursprünglichen Profilform abweichenden Bereich in Form einer Profilmodifikation versehen ist, wird über die gesamte Lagerbreite eine ausreichende Schmierspalthöhe im Gebiet der Flüssigkeitsreibung erzeugt. Das führt zu einem gleichmäßigeren Verlauf der Flächenpressung im Gleitlager, bei gleichzeitiger Erhaltung der vorteilhaften zylindrischen Form der inneren Mantelfläche der Lagerbuchse bzw. der ebenen Lagerfläche. Diese Profilmodifikation ist auf einen schmalen Bereich der Lagerbreite örtlich begrenzt und verbindet die bekannten Vorteile einer einfach zu fertigenden und robusten zylindrischen Gleitlagerung mit einer erheblichen Tragfähigkeitsverbesserung.

Mehrere Ausführungsbeispiele der Erfindung sind in der Zeichnung dargestellt und werden zusammen mit den damit verbundenen Vorteilen im Folgenden näher erläutert. Es zeigen:
- Fig. 1: eine Ansicht auf eine Welle mit einer radialen Gleitlagerung in Lagerbuchsen nach dem Stand der Technik,
- Fig. 2: den Längsschnitt durch eine durchgebogene Welle im Maschinenverband nach dem Stand der Technik,
- Fig. 3: eine Ansicht auf ein einzelnes Gleitlager im verkanteten Zustand nach dem Stand der Technik,
- Fig. 4: eine Ansicht auf ein einzelnes Gleitlager im verkanteten Zustand gemäß der Erfindung,
- Fig. 5: die Einzelheit X nach Fig. 4,
- Fig. 6: ein anders Ausführungsbeispiel gemäß der Erfindung, dargestellt an einer Welle, und
- Fig. 7: die Ansicht auf eine axiale Gleitlagerung.

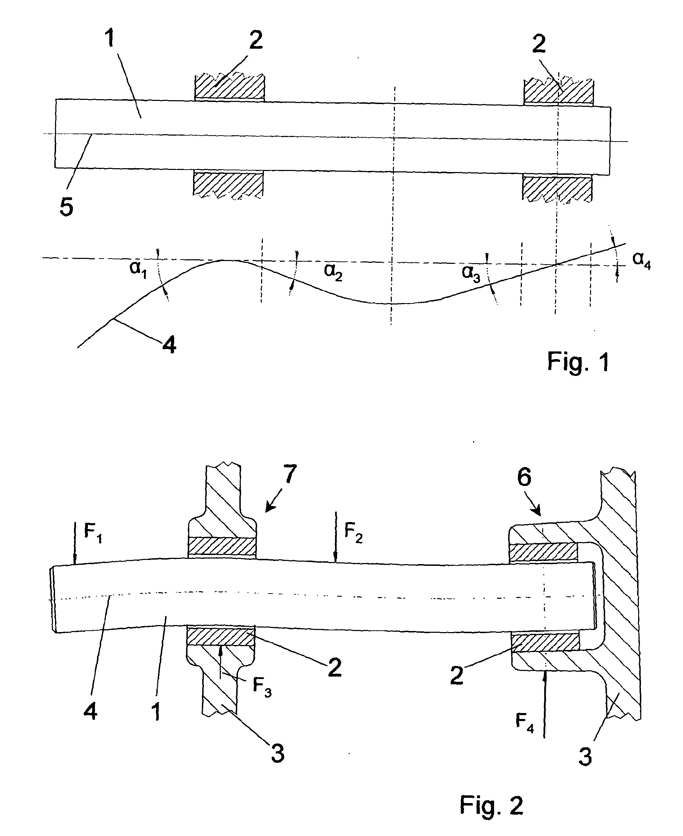

Die Fig. 1 und 2 zeigen eine einfache Welle 1, die in zwei Lagerbuchsen 2 einer radialen Gleitlagerung in einem Gehäuse 3 eines Getriebes oder einer Maschine gemäß dem Stand der Technik gelagert ist. Nicht dargestellt sind die in Abhängigkeit vom jeweiligen Verwendungsfall an der Welle 1 funktionsbedingt erforderlichen unterschiedlichen Durchmesser und Absätze zur Aufnahme der eigentlichen Maschinenteile, wie z. B. Zahnräder oder Kupplungen. Von jedem dieser Elemente wirken auf die Welle 1 Kräfte F₁, F₂, F₃, F₄ ein, die über die Lagerbuchsen 2 im Gehäuse 3 abgestützt werden. Unter dieser Belastung wird die Welle 1 durchgebogen, so dass sich eine Biegelinie 4 einstellt, deren Verlauf von der idealen geradlinigen Drehachse 5 der Welle 1 abweicht. Die eingezeichneten Verformungen sind zur Erklärung unmaßstäblich vergrößert wiedergegeben. Unabhängig davon, ob die Gleitlagerung im Maschinenverband als Endlager 6 mit einseitigem Welleneintritt oder als Mittenlager 7 mit durchgehender Welle ausgeführt ist, stellen sich zwischen der Drehachse 5 und der Biegelinie 4 unterschiedliche last- und ortsabhängige Einspannwinkel (α₁, α₂, α₃, α₄) ein. Diese elastische Verformung verursacht das nachteilige Kantentragen der Lagerbuchse 2 nach dem Stand der Technik.

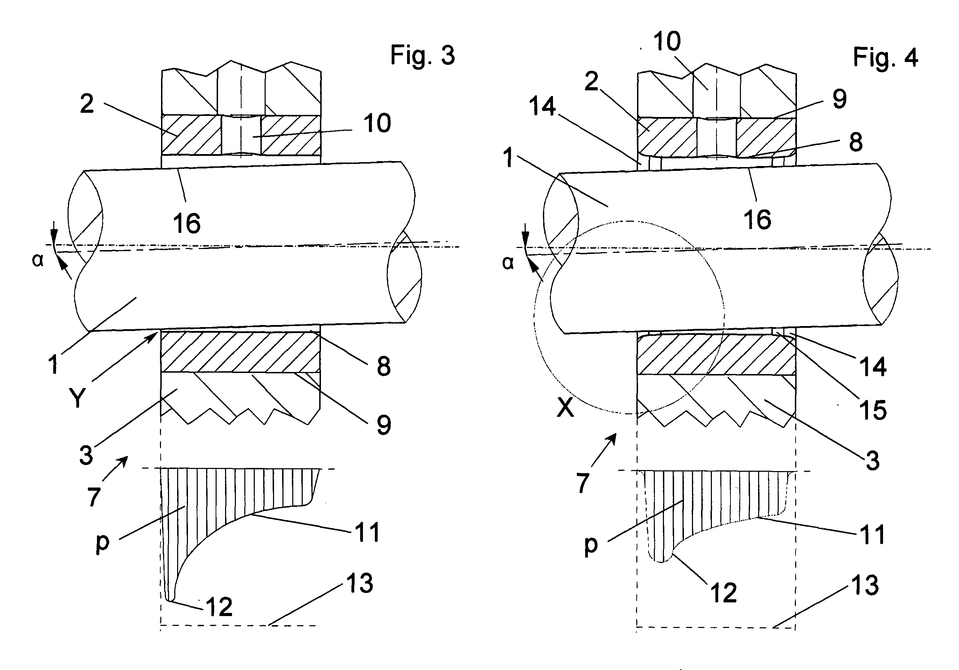

Die Fig. 3 zeigt eine Ansicht auf ein Gleitlager im verkanteten Zustand nach dem Stand der Technik. Die innere Mantelfläche 8 der Lagerbuchse 2 ist in vorteilhafterweise als einfache zylindrische Bohrung ausgeführt. Die äußere Mantelfläche 9 der Lagerbuchse 2 sitzt in dem Gehäuse 3. Im unbelasteten Bereich des Gleitlagers ermöglicht eine Schmierölbohrung 10 der Schmierölzuführung die Versorgung des Gleitlagers mit dem benötigten Schmieröl. Das Öl strömt durch das Gleitlager zu den stirnseitigen Enden der Lagerbuchse 2 und bewirkt dabei als Folge der Wellenrotation die hydrodynamische Lagerung der Welle 1. Zusätzlich führt das Öl die Dissipationswärme ab. Im Eingangsbereich Y der Welle 1 in die Lagerbuchse 2 bewirkt die Verkantung der Welle 1 eine Verringerung der Spalthöhe. Diese Spalthöhenänderung darf nicht mit der funktionsbedingten radialen Ringspalthöhenänderung eines Gleitlagers verwechselt werden. Trotzdem führt diese überlagerte Wellenbiegung auch im radial engsten Spalt zu einer Unterschreitung der erforderlichen minimalen Schmierspalthöhe und somit zu einem verschleißbehafteten lokalen Mischreibungsgebiet. Aufgrund der Verengung im Bereich der Verkantung wird der Ölstrom an dieser Stelle behindert und führt zu einer zusätzlichen unerwünschten thermischen Belastung.

Die abzustützende Lagerkraft wirkt auf den Werkstoff der Lagerbuchse 2 als Flächenpressung P ein. Die dargestellte Projektion über die Lagerbreite zeigt im unteren Teil der Fig. 3 qualitativ den Kurvenverlauf 11 der tatsächlichen Flächenpressung P. Der Flächeninhalt unter dem Kurvenverlauf 11 ist ein Maß für die Belastung. Im direkten Eingangsbereich in die Lagerbuchse 2 liegt das Maximum 12 der Flächenpressung P. Dieser Wert des Maximums 12 muss kleiner als der maximal zulässige, durch die Linie 13 gekennzeichnete Werkstoffkennwert sein. Insgesamt zeigt sich im Vergleich des zulässigen Werkstoffkennwertes mit dem Kurvenverlauf 11 der tatsächlichen Flächenpressung eine schlechte Ausnutzung der Materialeigenschaft der Tragfähigkeit der Gleitlagerung.

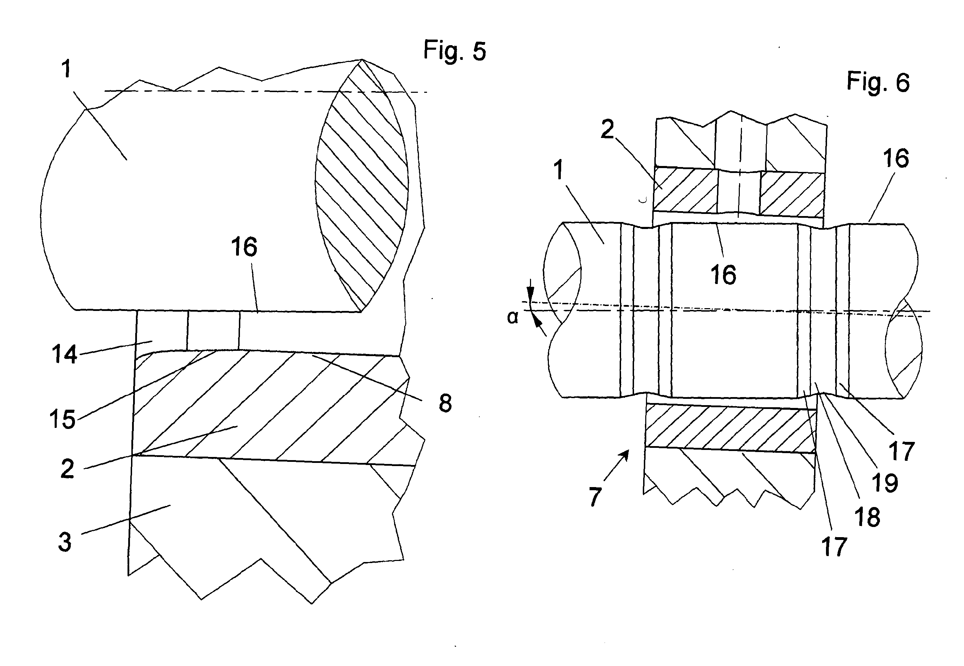

Die in den Fig. 4 und 5 dargestellte erfindungsgemäße radiale Gleitlagerung enthält eine Lagerbuchse 2, die wie die Lagerbuchse gemäß dem Stand der Technik eine innere Mantelfläche 8 in Form einer zylindrischen Bohrung aufweist. Eine so gestaltete Lagerbuchse 2 ist mit dem erforderlichen Toleranzfeld einfach zu fertigen und zu messen. Gegenüber dem Stand der Technik ist die erfindungsgemäße Lagerbuchse jedoch mit einer Profilmodifikation in Form eines von der Zylinderform abweichenden Bereiches 14 versehen, in den die innere zylindrische Mantelfläche 8 der Lagerbuchse 2 zur Stirnseite hin übergeht. In diesem Bereich 14 ist die Mantelfläche 8 entlang einer stetig verlaufenden Kurve in radialer Richtung zunehmend zurückgenommen.

Die kontinuierliche Rücknahme der Flankenform der inneren Mantelfläche 8 in radialer Richtung liegt in der Größenordnung von Mikrometern. Die axiale Breite des von der Zylinderform abweichenden Bereiches erstreckt sich über einige Millimeter und kann in Abhängigkeit von den Bedingungen bis zu einem Drittel der Lagerbreite einnehmen.

Der von der Zylinderform abweichende Bereich 14 ist im Falle der Anordnung als Mittenlager 7 (Fig. 4) an beiden Stirnseiten und bei der Anordnung als Endlager 6 gemäß Fig. 2 nur auf der dem Wellenende abgewandten Stirnseite der Lagerbuchse 2 vorgesehen.

Die Profilmodifikation in dem von der Zylinderform abweichenden Bereich 14 im Randbereich an einer oder beiden Stirnseiten der Lagerbuchse 2 korrigiert die biegungsbedingte Spaltverjüngung durch eine Vergrößerung des tatsächlichen radialen Lagerdurchmessers. Die Spalthöhe bleibt über die Lagerbreite relativ konstant. Zusätzlich führt die Profilmodifikation unmittelbar zu einem über die Lagerbreite ausgeglicheneren Verlauf der Flächenpressung P gemäß dem Kurvenverlauf 11 (Fig. 4). Bei gleicher Belastung sind die von dem Kurvenverlauf 11 der Flächenpressung P umschriebenen Flächeninhalte beim Stand der Technik und bei der Erfindung gleich groß, wie sich aus dem Vergleich der Fig. 3 und 4 erkennen lässt. Hieraus ergibt sich der unmittelbare Vorteil der Erfindung, dass aufgrund des großen Abstandes der tatsächlichen Belastung gemäß Kurvenverlauf 11 von dem zulässigen Werkstoffkennwert gemäß Linie 13 der Belastbarkeit und aufgrund des betriebssicher eingehaltenen minimalen Schmierspalts das Gleitlager im Hinblick auf die beiden wesentlichen Auslegungskriterien kleiner dimensioniert werden kann. Beim Einsatz der bekannten standardisierten Lagergrößen kann durch die erfindungsgemäße Profilmodifikation die Lagergröße um mindestens eine Baugröße verkleinert werden.

Als weiterer Vorteil erreicht das Maximum 12 der Flächenpressung P erst in einem hinreichend großen Abstand zur Stirnseite des Gleitlagers seinen Maximalwert, der zudem signifikant verringert ist. Im Gegensatz zum Stand der Technik können hier die weniger belasteten Bereiche zu beiden Seiten der Belastungsspitze eine Stützwirkung ausüben. Da zudem an der Stelle des Maximums 12 der Flächenpressung P ein lokales Temperaturmaximum liegt, wird in der erfindungsgemäßen Ausführung auch die Wärmeableitung im Werkstoff verbessert.

Der Übergang von dem von der Zylinderform abweichenden Bereich 14 der Rücknahme der Mantelfläche 8 in den zylindrischen Lagerbereich der inneren Mantelfläche 8 muss kontinuierlich ohne erkennbare Unstetigkeitsstellen erfolgen. Vorteilhafterweise ist ein axialer Abschnitt 15 vorzusehen, der die beiden Profilformen des Bereiches 14 und der zylindrischen Mantelfläche 8 mit einer zu beiden Seiten asymptotisch verlaufenden Kurve verbindet. Mit einer solchen Glättung des Übergangs kann keine nachteilige Unstetigkeit entstehen, die wiederum nicht die Strömung des Schmieröls im Ringspalt der Gleitlagerung beeinflussen könnte. Darüber hinaus gestattet der asymptotische Abschnitt 15 auch eine Nacharbeit der zylindrischen Mantelfläche 8 ohne Zerstörung des zurückspringenden Bereiches 14, der vorzugsweise als stetig verlaufende Kurve parabolförmig oder kreisbogenförmig oder als logarithmische Funktion ausgebildet ist.

Die belastungsabhängige Profilmodifikation in dem von der Zylinderform abweichenden Bereich 14 ist auf der Grundlage von Berechnungen zum Tragfähigkeitsverlauf zu dimensionieren.

Individuelle Untersuchungen ergeben einen optimierten Verlauf der Mantelfläche 8 der Lagerbuchse 2. Es zeigt sich aber auch, dass sich die Profilmodifikation in Abhängigkeit von der Tragfähigkeit des Gleitlagers und der Werkstoffe standardisieren lässt. Somit können bekannte standardisierte Vorzugsreihen für Gleitlager mit einer universellen Modifikation derart verbessert werden, dass bei der Auswahl der Lagergröße im Vergleich zum Stand der Technik mindestens eine kleinere Lagergröße gewählt werden kann. Aus einem anderen Blickwinkel bedeutet dieses Ergebnis, dass die erfindungsgemäße Gestaltung der inneren Mantelfläche 8 von Gleitlagern zu höher belastbaren Lagerungen führt.

Die Fig. 6 zeigt eine vergrößerte Ansicht auf einen Wellenabschnitt der Welle 1 mit einer erfindungsgemäßen Profilmodifikation an der zylindrischen Umfangsfläche 16 der Welle 1 mit einer Wellenschiefstellung um den Winkel α. Das Beispiel zeigt eine vorteilhafte Anwendung der erfindungsgemäßen Profilmodifikation auf den Rotor einer Gleitlagerung. An der Welle 1 ist ausgehend von der zylindrischen Umfangsfläche 16 ein asymptotischer Übergangsabschnitt 17, ein modifizierter, entlang einer stetig verlaufenden, vorzugsweise parabelförmigen Kurve gegenüber der zylindrischen Umfangsfläche 16 zunehmend zurückgenommener Bereich 18 und ein Scheitelpunkt 19 vorgesehen. Es schließt sich in diesem Beispiel in umgekehrter Reihenfolge die Gestaltung des Übergangs zur unmodifizierten zylindrischen Umfangsfläche 16 der Welle 1 an. Der modifizierte Wellenabschnitt ist in der Paarung einer Welle 1 mit einer Lagerbuchse 2 im Eingangsbereich zu positionieren.

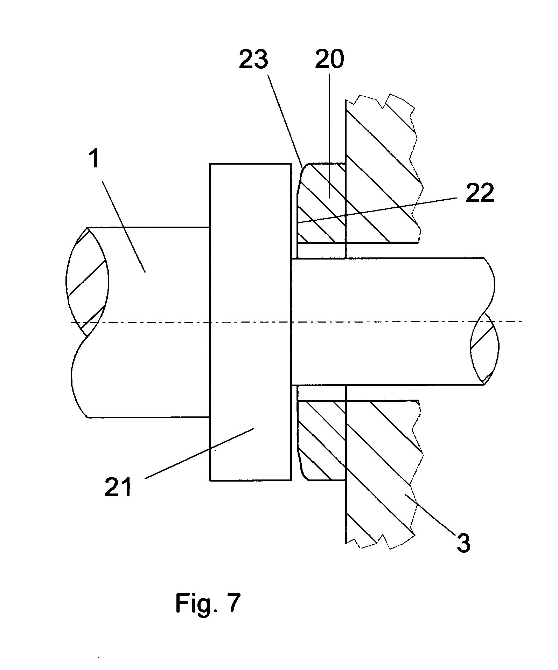

Entsprechend der ausgeführten Beschreibung am Beispiel eines radialen Gleitlagers lässt sich auch an Axialdrucklagern eine Profilmodifikation zur Tragfähigkeitserhöhung einsetzen. Hierzu ist in der Fig. 7 eine Ausführungsform gezeigt. Die axiale Gleitlagerung besteht aus einem axial zur Welle angeordneten und im Gehäuse 3 abgestützten Lagerkörper 20 mit einer einem Wellenbund 21 gegenüber liegenden, ebenen Lagerfläche 22. Der Abstand der ebenen Lagerfläche 22 gegenüber dem Wellenbund 21 wird im Randbereich 23 der Lagerfläche 22 entlang einer stetig verlaufenden Kurve zunehmend größer entsprechend dem modifizierten Bereich 14 der radialen Gleitlagerung nach Fig. 4.

## Patentansprüche

1. Hydrodynamische radiale Gleitlagerung für eine Welle (1), bestehend aus einer die Umfangsfläche (16) der Welle (1) umgebenden Lagerbuchse (2) mit einer inneren, zylindrischen Mantelfläche (8), **dadurch gekennzeichnet, dass** zur Stirnseite der Lagerbuche (2) hin ein von der Zylinderform abweichender Bereich (14) vorgesehen ist und dass der Abstand zwischen der Umfangsfläche (16) der Welle (1) und der inneren Mantelfläche (8) der Lagerbuchse (2) in dem abweichenden Bereich (14) entlang einer stetig verlaufenden Kurve zunehmend größer ausgebildet ist.

2. Hydrodynamische radiale Gleitlagerung nach Anspruch 1, **dadurch gekennzeichnet, dass** die zylindrische Mantelfläche (8) der Lagerbuche (2) zur Stirnseite hin in den Bereich (14) übergeht, dass die Mantelfläche (8) abweichend von der Zylinderform der inneren, zylindrischen Mantelfläche (8) entlang einer stetig verlaufenden Kurve in radialer Richtung zunehmend zurückgenommen ausgebildet ist.

3. Hydrodynamische Gleitlagerung nach Anspruch 1, **dadurch gekennzeichnet, dass** der von der Zylinderform abweichende Bereich (14) sich über wenige Millimeter bis zu einem Drittel der Lagerbreite erstreckt.

4. Hydrodynamische Gleitlagerung nach einem der Ansprüche 1 bis 3, **dadurch gekennzeichnet, dass** zwischen der stetig verlaufenden Kurve im abweichenden Bereich (14) und der zylindrischen Mantelfläche (8) ein Abschnitt (15) vorgesehen ist, dass durch den Abschnitt (15) der abweichende Bereich (14) mit der stetig verlaufenden Kurve und die zylindrische Mantelfläche (8) entlang einer asymptotisch ausgebildeten Kurve verbunden sind.

5. Hydrodynamische Gleitlagerung nach einem der Ansprüche 1 bis 4, **dadurch gekennzeichnet, dass** die stetig verlaufende Kurve im Randbereich (14) parabolförmig ausgebildet ist.

6. Hydrodynamische Gleitlagerung nach einem der Ansprüche 1 bis 5, **dadurch gekennzeichnet, dass** die stetig verlaufende Kurve im abweichenden Bereich (14) kreisbogenförmig ausgebildet ist.

7. Hydrodynamische Gleitlagerung nach einem der Ansprüche 1 bis 6, **dadurch gekennzeichnet, dass** die stetig verlaufende Kurve im abweichenden Bereich (14) nach einer logarithmischen Funktion ausgebildet ist.

8. Hydrodynamische Gleitlagerung nach einem der Ansprüche 1 oder 2, **dadurch gekennzeichnet, dass** bei der Anordnung der Gleitlagerung in einem Mittenlager (7) der von der Zylinderform abweichende Bereich (14) der Lagerbuchse (2) an beiden Stirnseiten vorgesehen ist.

9. Hydrodynamische Gleitlagerung nach einem der Ansprüche 1 oder 2, 5 bis 10, **dadurch gekennzeichnet, dass** bei der Anordnung der Gleitlagerung in einem Endlager (6) der von der Zylinderform abweichende Bereich (14) der Lagerbuchse (2) an der dem Endlager abgewandten Stirnseite vorgesehen ist.

10. Hydrodynamische Gleitlagerung nach einem der Ansprüche 1 oder 2, **dadurch gekennzeichnet, dass** in dem von der Zylinderform abweichenden Bereich (14) der stetig zunehmende Abstand zwischen der Umfangsfläche (16) der Welle (1) und der inneren Mantelfläche (8) der Lagerbuchse (2) und die Form der stetig verlaufenden Kurve im abweichenden Bereich (14) in Abhängigkeit von dem äußeren Durchmesser und der Breite der Lagerbuchse (2) und der Tragfähigkeit des für die Lagerbuchse (2) verwendeten Werkstoffes in standardisierter Form vorbestimmt ist.

11. Hydrodynamische radiale Gleitlagerung nach Anspruch 1, **dadurch gekennzeichnet, dass** die zylindrische Umfangsfläche (16) der Welle (1) zur Stirnseite der Lagerbuche (2) hin in einen Bereich (18) übergeht, dass die Umfangfläche (16) abweichend von der Zylinderform der Umfangsfläche (16) entlang einer stetig verlaufenden Kurve in radialer Richtung zunehmend zurückgenommen ausgebildet ist.

12. Hydrodynamische axiale Gleitlagerung für eine Welle, bestehend aus einem axial zur Welle (1) angeordneten Lagerkörper (20) mit einer dem Wellenende oder einem Wellenbund (21) gegenüber liegenden, ebenen Lagerfläche (22), **dadurch gekennzeichnet, dass** der Abstand zwischen der ebenen Lagerfläche (22) und dem Wellenende oder dem Wellenbund (21) im Randbereich (23) der Lagerfläche (22) entlang einer stetig verlaufenden Kurve zunehmend größer wird.

13. Hydrodynamische axiale Gleitlagerung nach Anspruch 12, **dadurch gekennzeichnet, dass** die ebene Lagerfläche (22) im Randbereich (23) entlang einer stetig verlaufenden Kurve zunehmend zurückspringt.
